# FASCICULE DE BREVET EUROPEEN

(11) **EP 2 115 999 B1**
(45) Date de publication et mention de la délivrance du brevet: **07.07.2010**
(21) Numéro de dépôt: 08762011.8
(22) Date de dépôt: 30.01.2008
(51) Int. Cl.: H04L 29/06

(54) **RESEAU DE COMMUNICATION COMPRENANT DES MOYENS DE GESTION DE CONFLITS LORS DE L'EXECUTION DE PLUSIEURS SERVICES DE COMMUNICATION**
KOMMUNIKATIONSNETZWERK MIT MITTELN ZUR VERWALTUNG VON KONFLIKTEN WÄHREND DER AUSFÜHRUNG MEHRERER KOMMUNIKATIONSDIENSTE
COMMUNICATION NETWORK INCLUDING MEANS FOR MANAGING CONFLICTS DURING THE EXECUTION OF SEVERAL COMMUNICATION SERVICES

(30) Priorité: 31.01.2007 FR 0752982
(43) Date de publication de la demande: 11.11.2009
(73) Titulaire: FRANCE TELECOM, 75015 Paris (FR)
(72) Inventeur: PETESCH, Fabrice, F-22300 Lannion (FR)
(74) Mandataire: Desormiere, Pierre-Louis
(86) Numéro de dépôt international: PCT/FR2008/050151
(87) Numéro de publication internationale: WO 2008/110717

(56) Documents cités:
- EP-A1- 1 744 569
- US-A1- 2003 187 992
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN1, no. V731, octobre 2006 (2006-10), XP014035467 ISSN: 0000-0001

## Description

L'invention concerne le domaine des télécommunications, et plus particulièrement un réseau de communication, comprenant :
- n gestionnaires de service, n étant un nombre entier supérieur ou égal à 2, chaque gestionnaire de service étant susceptible d'exécuter un service associé, c'est-à-dire de fournir le dit service à un terminal connecté au réseau,
- un moyen de routage adapté pour transmettre à un terminal des messages protocolaires émis par un gestionnaire de service lors de l'exécution du service associé.

L'invention trouve une application par exemple pour la création d'un réseau IMS (acronyme anglais pour IP Multimedia Subsystem) de communication entre plusieurs terminaux. Le mot terminal doit être ici compris au sens le plus large. Il peut s'agir d'un terminal de téléphonie tel qu'un téléphone fixe ou mobile, mais également de tout terminal susceptible d'être connecté à un réseau pour émettre à destination d'un ou plusieurs autres terminaux ou du réseau ou pour recevoir d'un autre terminal ou du réseau des données audio, vidéo, du texte ou des données numériques.

De tels réseaux comprennent généralement un ou plusieurs gestionnaires de service, chacun adapté pour gérer l'exécution d'un service associé, c'est-à-dire la fourniture du dit service à un terminal, comme par exemple un service de messagerie vocale, un service de tonalité de retour d'appel (plus connu en langage anglo-saxon sous le nom de Ring Back Tone ou Fun Tone), un service de composition de numéro à distance (connu en langage anglo-saxon sous le nom de Click To Dial). Plusieurs gestionnaires de service peuvent être regroupés dans un même gestionnaire d'application, qui fournit ainsi plusieurs services.

Un terminal connecté au réseau peut avoir accès à un ou plusieurs services proposés par le réseau, éventuellement moyennant un abonnement approprié à ces services.

L'exécution d'un service se fait en général par l'échange de messages protocolaires entre le gestionnaire de service associé et un terminal qui est généralement le terminal abonné au service (dans le cas du service de messagerie ou du service de Click-To-Dial par exemple) ou un terminal appelé par le terminal abonné. L'expression "terminal abonné" est en pratique un abus de langage, pour parler plus précisément d'un terminal connecté au réseau et appartenant à un utilisateur du réseau abonné au service concerné, le dit utilisateur pouvant disposer de plusieurs terminaux susceptibles d'être connectés au réseau pour utiliser le même service.

Le terme message protocolaire doit être compris ici au sens le plus large pour désigner plus généralement : des requêtes ou des réponses associées échangées dans le cadre d'une mise en relation entre le terminal et le gestionnaire de service, des instructions, des données audio, vidéo ou de texte échangées entre le terminal et le gestionnaire de service au cours de l'exécution du service. Chaque message est présenté dans un protocole approprié (protocole SIP, etc.).

De tels réseaux comprennent également un moyen de routage, dont la principale fonction est de transmettre à un terminal des messages protocolaires reçus d'un gestionnaire de service, ou d'un autre terminal du même réseau ou d'un réseau tiers, ou inversement de transmettre des messages protocolaires reçus d'un terminal à un gestionnaire de service ou à un autre terminal. Dans un réseau IMS par exemple, le moyen de routage est généralement une partie d'un gestionnaire d'entrée ayant également des fonctions d'identification, de connexion ou de déconnexion d'un terminal. Le gestionnaire d'entrée d'un réseau IMS selon la norme 3GPP 23.002 regroupe ainsi toutes les fonctions connues sous les acronymes anglais I/P/S-CSCF (Interrogating-, Proxy-, Serving-Call State Control Function). Les messages protocolaires peuvent être basés par exemple sur le protocole SIP (Session Initiation Protocol) ou sur tout autre protocole approprié en fonction du type de message protocolaire.

Dans de tels réseaux, un problème de conflits peut se poser éventuellement lors de l'exécution en parallèle ou successive de plusieurs services par des gestionnaires de service différents. L'exécution d'un deuxième service peut par exemple venir modifier un message protocolaire d'un premier service en cours d'exécution, entraînant un dysfonctionnement du premier service, voire une interruption de ce premier service. Ou bien, l'exécution d'un deuxième service peut être inappropriée lors de l'exécution en cours d'un premier service.

C'est le cas par exemple lorsque le premier service de Ring Back Tone et le deuxième service de Click To Dial sont activés en parallèle.

Le service de Ring Back Tone permet à un abonné utilisateur d'un terminal appelé de faire entendre à un utilisateur d'un terminal appelant une tonalité particulière lorsque le terminal appelant a demandé une mise en relation avec le terminal appelé et attend d'être mis en relation avec le terminal appelé ; ainsi, pendant que le terminal appelé sonne pour indiquer l'arrivée d'un appel, le terminal appelant reçoit une tonalité particulière choisie par l'utilisateur du terminal appelé.

Le service Click To Dial permet à un abonné de demander par l'intermédiaire d'un premier terminal appelant (par exemple un PC) à ce qu'un deuxième terminal appelant (par exemple un téléphone) soit mis en relation avec un terminal appelé d'un autre utilisateur. Pour cela, lorsque le premier terminal appelant demande la mise en relation du deuxième terminal appelant avec le terminal appelé de l'autre utilisateur, le gestionnaire de service du service Click To Dial fait d'abord sonner le premier terminal appelant puis, après que l'abonné ait décroché ledit premier terminal appelant, le gestionnaire de service fait sonner le terminal appelé de l'autre utilisateur.

Si un utilisateur appelant est abonné au premier service de Ring Back Tone et au deuxième service de Click To Dial, se pose un problème lorsque par exemple l'utilisateur appelant demande par l'intermédiaire d'un premier de ses terminaux appelants, à ce qu'un deuxième de ses terminaux appelants soit mis en relation avec un terminal appelé d'un autre utilisateur. En effet, dans ce cas, le premier terminal appelant active le gestionnaire du service de Click To Dial, qui dans un premier temps fait sonner le deuxième terminal appelant. Le deuxième terminal appelant recevant une demande de mise en relation, il active le gestionnaire du service de Ring Back Tone, qui fournit alors une tonalité particulière à l'appelant du deuxième terminal appelant, c'est-à-dire le gestionnaire du service de Click To Dial. L'émission de la tonalité particulière est inutile, notamment car elle n'apporte aucun service aux utilisateurs ; elle peut également entraîner un dysfonctionnement du gestionnaire du service de Click To Dial, ce dernier n'étant pas conçu à priori pour recevoir une telle tonalité.

De tels réseaux sont décrits dans le document US2003187922 de l'état de la technique.

Si plusieurs services sont susceptibles d'être fournis par un même gestionnaire d'application, il est généralement prévu, dans le gestionnaire d'application, en complément des gestionnaires de services, un gestionnaire de conflits qui regroupe l'ensemble des règles de résolution des conflits potentiels entre tous les services disponibles sur le gestionnaire d'application.

Un premier inconvénient d'un tel gestionnaire de conflits est qu'il doit être modifié si des conflits apparaissent avec des services situés sur d'autres gestionnaires d'application. Or une telle modification peut s'avérer difficile à réaliser, notamment si les gestionnaires d'application sont la propriété de fournisseurs de services différents ayant des intérêts économiques divergents.

Un deuxième inconvénient d'un tel gestionnaire de conflits est qu'il regroupe nécessairement un très grand nombre de règles de résolution des conflits, fonction exponentiellement du nombre total de services présents sur le réseau. Aussi, lorsqu'un conflit se présente, il faut faire un choix entre un très grand nombre de règles pour résoudre le conflit.

Pour pallier le premier inconvénient, la norme 3GPP 23.002, qui définit l'ensemble des fonctionnalités des éléments d'un réseau IMS prévoit un gestionnaire de conflits appelé SCIM (pour Service Capability Interaction management), installé dans le réseau indépendamment des gestionnaires d'application. La fonction du SCIM est de gérer les éventuels conflits entre deux ou plusieurs gestionnaires de service. Toutefois comme la norme ne donne aucune information, ni sur la manière dont les conflits doivent ou peuvent être gérés, ni sur la manière de réaliser le gestionnaire de conflits, elle n'apporte aucune solution pratique pour pallier le deuxième inconvénient. En pratique aucun réseau de communication actuel ne dispose d'un tel gestionnaire de conflits.

L'invention offre une solution technique qui ne présente pas les inconvénients évoqués ci-dessus.

Pour cela l'invention propose un réseau de communication comprenant :
- n gestionnaires de service, n étant un nombre entier supérieur ou égal à 2, chaque gestionnaire de service étant susceptible d'exécuter un service associé,
- un moyen de routage adapté pour transmettre à un terminal des messages protocolaires émis par un gestionnaire de service lors de l'exécution du service associé.

Le réseau selon l'invention est **caractérisé en ce qu**'il comprend également un gestionnaire de conflits comprenant
- un ensemble de paquets, chaque paquet comprenant des règles de tri de messages protocolaires susceptibles d'être émis par au moins deux gestionnaires de service,
- un moyen de sélection, pour sélectionner un paquet en fonction d'un indicateur des services auxquels le terminal a accès,
- un moyen de tri pour, en fonction d'un contenu d'un paquet sélectionné, trier des messages protocolaires envoyés par au moins deux gestionnaires de service lors de l'exécution des services associés et transmettre les messages protocolaires triés au moyen de routage.

L'invention concerne également un procédé de gestion de conflits lors de l'exécution de services à destination d'un terminal dans un réseau de communication selon l'invention. Le procédé est caractérisé par les étapes suivantes :
- lors d'une connexion du terminal au réseau, la mise à jour d'un indicateur des services auxquels le terminal a accès,
- la sélection, en fonction de l'indicateur, d'un paquet de règles de tri de messages protocolaires émises par des gestionnaires de services,
- en fonction du paquet sélectionné, le tri de messages protocolaires envoyés par plusieurs gestionnaires de service et la transmission au terminal des messages protocolaires triés.

Le gestionnaire de conflits selon l'invention sélectionne ainsi, en fonction des services auxquels le terminal a accès, les règles de résolution appropriées et seulement celles-là. Il gère ensuite les éventuels conflits lorsqu'il reçoit des messages protocolaires émis par plusieurs gestionnaires de services, à partir d'un nombre limité de règles contenues dans le paquet sélectionné. Lors d'un conflit, le choix d'une règle appropriée est ainsi facilité.

Selon un mode de réalisation de l'invention, l'indicateur des services auxquels le terminal a accès est un multiplet de n bits, chaque bit de rang i compris entre 1 et n étant susceptible de prendre deux valeurs :
- un si le terminal a accès à un service de rang i,
- zéro sinon.

L'indicateur donne ainsi immédiatement une information sur les services auxquels l'abonné a accès.

De manière similaire, chaque paquet peut être indexé par un index de n bits, chaque bit de rang i compris entre 1 et n étant susceptible de prendre deux valeurs :
- un, si le paquet comprend des règles de tri de messages protocolaires émises par le gestionnaire de service de rang i et par d'autres gestionnaires de service de rangs différents de i, ou
- zéro sinon.

L'index d'un paquet donne ainsi immédiatement une information explicite sur le contenu du paquet.

Si les index des paquets et les indicateurs des terminaux ont des formats similaires, tels que ci-dessus par exemple, la sélection d'un paquet consiste à sélectionner un paquet dont l'index est identique à l'indicateur.

Le choix de formats appropriés pour les index des paquets et les indicateurs des terminaux facilite ainsi la sélection d'un paquet par une simple comparaison.

De même qu'un réseau connu, un réseau selon l'invention peut comprendre :
- un gestionnaire de profils, comprenant une liste des terminaux connectés au réseau et une liste de profils abonnés associée, chaque profil abonné comprenant notamment un indicateur des services auxquels le terminal a accès,
- un gestionnaire de connexion adapté pour identifier un abonné, connecter le dit terminal au réseau et mettre à jour le gestionnaire de profils en fonction des services auxquels le terminal a accès.

Le gestionnaire de conflits selon l'invention n'a ainsi pas besoin d'indicateurs des services auxquels les terminaux ont accès et peut utiliser les indicateurs existants. Les dits indicateurs peuvent être fournis au gestionnaire de conflits sur simple demande de ce dernier, ou systématiquement à la mise à jour d'un indicateur.

L'invention concerne enfin un procédé d'ajout d'un service additionnel de rang n+1 dans un réseau de communication tel que décrit ci-dessus et comprenant initialement n gestionnaires de services. Le procédé d'ajout comprend les étapes suivantes :
- l'ajout d'un gestionnaire de service de rang n+1,
- l'ajout, dans le gestionnaire de conflits, de paquets de règles appropriés pour résoudre des conflits d'interaction entre le service de rang n+1 et au moins un service de rang i compris entre 1 et n,
- la mise à jour, dans le gestionnaire de profils et pour chaque terminal connecté au réseau, de l'indicateur des services auxquels le terminal a accès.

Le mode de réalisation du gestionnaire de conflits selon l'invention permet ainsi une mise à jour rapide et simple du réseau lors de l'ajout d'un nouveau service, dans la mesure où cette mise à jour se fait sans modification ni des paquets de règles existants ni de leur index respectif. On ajoute simplement de nouveaux paquets.

L'invention sera mieux comprise et d'autres caractéristiques et avantages apparaîtront à la lecture de la description qui va suivre, d'exemples de mise en oeuvre d'un procédé de connexion et d'un système de connexion selon l'invention. La description est à lire en relation au dessin annexé dans lequel la figure unique est schéma bloc d'un réseau de communication selon l'invention.

Un réseau selon l'invention comprend essentiellement :
- n gestionnaires de service GS1, GS2, ..., GSn, chaque gestionnaire de service GS1, GS2, ..., GSn étant susceptible d'exécuter un service S1, S2, ..., Sn associé, n est un nombre entier supérieur ou égal à 2 ; dans l'exemple de la figure unique, n est égal à 3,
- un moyen de routage MR adapté pour transmettre à un terminal T des messages protocolaires émis par un gestionnaire de service lors de l'exécution du service associé,
- un gestionnaire de conflits SCIM.

Chaque gestionnaire de service GS1, GS2, ..., GSn comprend des moyens d'exécution d'un unique service de communication S1, S2, ..., Sn, comme par exemple un service S1 de messagerie vocale (gestionnaire GS1), un service S2 de Fun Tones (gestionnaire GS2), un service S3 Click-To-Dial (gestionnaire GS3), etc.

Plusieurs gestionnaires de services peuvent être regroupés dans un même gestionnaire d'application, par exemple s'ils sont fournis par le même fournisseur de service. Par exemple, sur la figure, le gestionnaire de service GS1 de messagerie vocale et le gestionnaire de service GS2 de Fun Tones sont regroupés dans un même gestionnaire d'application ASA qui est la propriété d'un opérateur de téléphonie, et le gestionnaire de service GS3 de Click-To-Dial est installé dans un serveur d'application ASB, propriété du propriétaire d'un site Internet accessible depuis une interface de navigation sur le réseau Internet.

Le réseau peut également comprendre, de même qu'un réseau connu, un gestionnaire de connexion GC et un gestionnaire de profil GP. Le gestionnaire de connexion GC a pour fonction d'identifier un terminal T demandant accès au réseau, de le connecter et de mettre à jour en conséquence le gestionnaire de profils GP, notamment par un indicateur des services auxquels le terminal a accès. Le gestionnaire de profils GP comprend notamment une liste des terminaux connectés au réseau et, pour chaque terminal T connecté au réseau, un profil de l'abonné utilisant le terminal, le dit profil comprenant notamment l'indicateur des services auxquels l'abonné a accès par l'intermédiaire du terminal connecté. Le profil des terminaux (ou des abonnés) peut être transmis aux gestionnaires de service, par exemple sur demande d'un gestionnaire de service recevant d'un terminal une demande d'exécution de service.

Selon l'invention, le gestionnaire de conflits SCIM du réseau comprend :
- un ensemble de paquets P(011), P(101), ..., P(111), chaque paquet comprenant des règles de tri de messages protocolaires susceptibles d'être émis par au moins deux gestionnaires de service,
- un moyen de sélection, pour sélectionner un paquet en fonction d'un indicateur des services auxquels le terminal a accès,
- un moyen de tri pour, en fonction d'un contenu d'un paquet sélectionné, trier des messages protocolaires envoyés par au moins deux gestionnaires de service lors de l'exécution des services associés et transmettre les messages protocolaires triés au moyen de routage MR.

Comme dans les réseaux antérieurs, le moyen de routage MR transmet ensuite un message protocolaire reçu du gestionnaire de conflits vers le terminal destinataire T.

Chaque paquet comprend des règles de tri de messages protocolaires susceptibles d'être émis par au moins deux gestionnaires de services. Chaque paquet définit ainsi l'ensemble des règles nécessaires à la résolution des conflits éventuels entre au moins deux services, notamment lorsqu'ils sont exécutés simultanément.

Les règles de résolution de conflits contenues dans un paquet dépendent notamment :
- des services en conflit éventuel, et / ou
- des conséquences d'un conflit éventuel, et / ou
- des solutions possibles à ce conflit, et / ou
- de l'intérêt et / ou du confort de l'abonné aux services concernés, et / ou
- de l'intérêt technique et / ou économique des fournisseurs des services concernés, et / ou,
- de l'intérêt technique, économique, politique de tiers tel qu'un organisme de régulation des réseaux par exemple, etc.

Les règles de résolution de conflits sont choisies par les fournisseurs de service ou par un tiers (propriétaire du réseau, organisme de régulation des réseaux, etc.) et peuvent selon le cas être essentiellement de deux types :
- la modification de messages protocolaires : par exemple, des messages protocolaires émis par un premier service sont modifiés, par le gestionnaire de conflit lorsque le premier service est exécuté en parallèle d'un deuxième service ; la modification d'un message protocolaire peut aller jusqu'à la suppression ou la non prise en compte du dit message par le gestionnaire de conflit,
- le changement de séquencement des messages protocolaires modifiés, en fonction de règles de priorité : par exemple, les messages protocolaires d'un premier service sont transmis en priorité par rapport aux messages protocolaires d'un deuxième service, lorsque le premier service et le deuxième service sont exécutés en parallèle.

Le premier type de règles est par exemple utilisé lorsque :
- l'arrêt de l'exécution du premier service n'est pas visible par l'abonné, ou
- l'exécution des messages protocolaires du premier service entraîne un dysfonctionnement important néfaste pour l'abonné, pour le fournisseur du deuxième service, pour le réseau, ou pour un tiers.

Le deuxième type de règles est par exemple utilisé lorsque l'exécution d'un message protocolaire du premier service peut être retardée sans incidence pour l'abonné, pour l'exécution globale du premier service, etc.

Le gestionnaire de conflits selon l'invention comprend autant de paquets de règles qu'il existe de combinaisons *admissibles* de deux services ou plus.

Dans l'exemple de la figure, on considère que toutes les combinaisons de services sont admissibles, et le gestionnaire de conflits SCIM comprend ainsi 4 paquets :
- un paquet P(011) pour gérer les conflits éventuels lors de l'exécution parallèle des services S1 et S2 ; pour cela, le paquet P(011) comprend l'ensemble des règles de tri de messages protocolaires susceptibles d'être émis par les gestionnaires de service GS2 et GS1,
- un paquet P(101) pour gérer les conflits éventuels lors de l'exécution parallèle des services S1 et S2 ; pour cela, le paquet P(101) comprend l'ensemble des règles de tri de messages protocolaires susceptibles d'être émis par les gestionnaires de service GS3 et GS1,
- un paquet P(110) pour gérer les conflits éventuels lors de l'exécution parallèle des services S1 et S2 ; pour cela, le paquet P(110) comprend l'ensemble des règles de tri de messages protocolaires susceptibles d'être émis par les gestionnaires de service GS3 et GS2,
- un paquet P(111) pour gérer les conflits éventuels lors de l'exécution parallèle des services S1 et S2 ; pour cela, le paquet P(111) comprend l'ensemble des règles de tri de messages protocolaires susceptibles d'être émis par les gestionnaires de service GS3, GS2 et GS1,

Dans un autre exemple, non représenté, on considère que certaines combinaisons de services ne sont pas admissibles, c'est-à-dire que l'abonné ne peut pas avoir accès à certaines combinaisons de services. Dans un tel cas, le gestionnaire de conflits n'a pas besoin de paquet de règles pour gérer les conflits entre les services d'une telle combinaison de services non admissible. Par exemple, si les fournisseurs des services S1 et S3 décident qu'un abonné du réseau ne doit pas avoir accès simultanément aux services S1 etS3, alors le paquet P(101) est inutile et peut être supprimé. La définition des combinaisons admissibles / non admissibles peut être faite par les fournisseurs de service, le propriétaire du réseau, un organisme tiers, etc.

Selon un mode de réalisation de l'invention, chaque paquet est indexé par un index de n bits, chaque bit de rang i compris entre 1 et n étant susceptible de prendre deux valeurs :
- une première valeur, par exemple un, si le paquet comprend des règles de tri de messages protocolaires émis par le gestionnaire de service de rang i et par d'autres gestionnaires de service de rangs différents de i, ou
- une deuxième valeur, par exemple zéro, sinon.

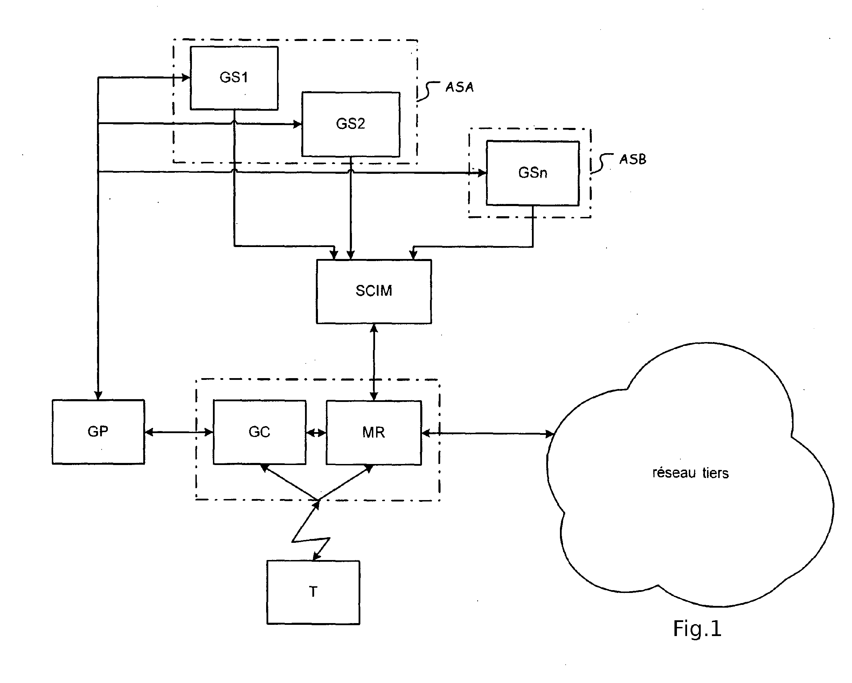

Ainsi, dans l'exemple de la figure 1, chaque paquet est indexé par un index (un nombre binaire) de n = 3 bits :
- le bit de rang 1 (bit de poids le plus faible) est égal à 1 si le paquet contient des règles de résolution de conflits entre le service S1 de rang 1 d'une part et le service S2 de rang 2 ou le service S3 de rang 3 d'autre part,
- le bit de rang 2 est égal à 1 si le paquet contient des règles de résolution de conflits entre le service S2 de rang 1 d'une part et le service S1 ou le service S3 d'autre part,
- le bit de rang 3 est égal à 1 si le paquet contient des règles de résolution de conflits entre le service S3 d'une part et le service S1 ou le service S2 d'autre part.

Les index associés aux paquets donnent ainsi une indication explicite du contenu du paquet.

Chaque gestionnaire de service donne ou non un droit d'accès à son service à un terminal, moyennant éventuellement un enregistrement ou un abonnement.

Dans un mode de réalisation de l'invention, l'indicateur des services auxquels le terminal a accès est un multiplet de n bits, c'est-à-dire un nombre binaire de n bits, chaque bit de rang i compris entre 1 et n étant susceptible de prendre deux valeurs :
- une première valeur, par exemple un, si le terminal a accès au service de rang i,
- une deuxième valeur, par exemple zéro, sinon.

Ainsi, dans l'exemple de la figure 1, l'indicateur peut prendre par exemple les valeurs suivantes :
- 001, 010, 100 si le terminal a accès à un seul service S1, S2 ou S3,
- 011, 101 ou 110 si le terminal a accès à deux services, S2, S1 ou S3, S1 ou S3, S2
- 111 si le terminal a accès au trois services S3, S2 et S1,
- 000 si le terminal n'a accès à aucun service.

En définissant ainsi l'index de chaque paquet et l'indicateur de chaque terminal par des nombres binaires construits de manière similaire, la sélection d'un paquet par le gestionnaire de conflits consiste simplement à sélectionner le paquet dont l'index est identique à l'indicateur du terminal ou de l'abonné qui l'utilise.

Bien sûr d'autres modes d'indexation des paquets peuvent être choisis. Egalement, les indicateurs des terminaux peuvent être présentés sous une autre forme qu'un multiplet binaire. On peut convertir les nombres binaires en un nombre décimal équivalent par exemple. On choisira cependant de préférence des index et des indicateurs ayant des formats qui permettent de retrouver très facilement un paquet approprié en fonction d'un indicateur.

Un avantage essentiel de l'invention est qu'il est possible d'ajouter très facilement un service supplémentaire de rang n+1 dans un réseau comprenant initialement n services. En effet, il est possible de modifier très facilement le réseau et le gestionnaire de conflits selon l'invention pour ajouter un nouveau service sur le réseau. Il suffit pour cela de réaliser les étapes suivantes :
- l'ajout, dans le réseau d'un gestionnaire de service de rang n+1,
- l'ajout, dans le gestionnaire de conflits, de paquets de règles appropriés pour résoudre des conflits d'interaction entre le service de rang n+1 et au moins un service de rang i compris entre 1 et n,
- la mise à jour, dans le gestionnaire de profils et pour chaque terminal connecté au réseau, de l'indicateur des services auxquels le terminal a accès.

La modification du gestionnaire de conflits consiste à *ajouter* des paquets de règles nécessaires à la résolution des conflits entre le nouveau service et les services installés antérieurement, *sans modifier les paquets existants* gérant les conflits entre les services installés antérieurement. Les index des paquets antérieurs n'ont pas non plus besoin d'être modifiés, il suffit simplement, si besoin, de les compléter par un bit de poids fort égal à 0 pour obtenir des index de taille n+1 bits. Les nouveaux paquets peuvent être par exemple fournis par le fournisseur qui souhaite proposer son nouveau service sur le réseau. Ils seront indexés par un nombre de n+1 bits dont le bit de poids le plus fort est égal à 1.

On notera que le gestionnaire de conflits selon l'invention résout les conflits apparaissant lors de l'envoi simultané à un terminal de plusieurs messages protocolaires émis par des gestionnaires de service différents lors de l'exécution parallèle de plusieurs services. Il n'y a en pratique pas de conflits dans les messages protocolaires envoyés par le terminal, même si ces message protocolaire sont à destination de plusieurs gestionnaires de service dans le cadre de l'exécution parallèle de plusieurs services. Le terminal émet en effet des messages protocolaires non pas simultanément, mais successivement, de sorte que chaque message protocolaire émis par le terminal peut être normalement exécuté sans perturber les précédents ou les suivants.

## Revendications

1. Réseau de communication, comprenant :
• n gestionnaires de service (AS1, AS2, ..., ASn), n étant un nombre entier supérieur ou égal à 2, chaque gestionnaire de service étant susceptible d'exécuter un service associé,
• un moyen de routage (MR) adapté pour transmettre à un terminal des messages protocolaires émis par un gestionnaire de service lors de l'exécution du service associé,
• un gestionnaire de conflits comprenant :
• un ensemble de paquets de règles, chaque paquet comprenant des règles de tri de messages protocolaires susceptibles d'être émis par au moins deux gestionnaires de service,
• un moyen de sélection, pour sélectionner un paquet de règles en fonction d'un indicateur des services auxquels le terminal a accès,
• un moyen de tri pour, en fonction d'un contenu d'un paquet de règles sélectionné, trier des messages protocolaires envoyés par au moins deux gestionnaires de service lors de l'exécution des services associés et transmettre les messages protocolaires triés au moyen de routage (MR),
**caractérisé en ce que** ledit réseau comprend en outre :
• un gestionnaire de profils, comprenant une liste des terminaux connectés au réseau et une liste de profils abonnés associée, chaque profil abonné comprenant notamment un indicateur des services auxquels le terminal a accès,
• un gestionnaire de connexion adapté pour identifier un terminal, connecter le dit terminal au réseau et mettre à jour l'indicateur en fonction des services auxquels le terminal a accès.

2. Réseau selon la revendication 1, dans lequel l'indicateur est un multiplet de n bits, chaque bit de rang i compris entre 1 et n étant susceptible de prendre deux valeurs :
• une première valeur (un) si le terminal a accès à un service de rang i,
• une deuxième valeur (zéro) sinon.

3. Réseau selon l'une des revendications 1 à 2, dans lequel chaque paquet est indexé par un index de n bits, chaque bit de rang i compris entre 1 et n étant susceptible de prendre deux valeurs :
• une première valeur (un), si le paquet comprend des règles de tri de messages protocolaires émis par le gestionnaire de service de rang i et par d'autres gestionnaires de service de rangs différents de i, ou
• une deuxième valeur (zéro) sinon.

4. Réseau selon la revendication 3 prise en combinaison avec les revendications 1 et 2, dans lequel la sélection d'un paquet consiste à sélectionner un paquet dont l'index est identique à l'indicateur.

5. Procédé de gestion de conflits lors de l'exécution de services à destination d'un terminal dans un réseau de communication comprenant :
• n gestionnaires de service (AS1, AS2, ..., ASn), n étant un nombre entier supérieur ou égal à 2, chaque gestionnaire de service étant susceptible d'exécuter un service associé,
• un moyen de routage (MR) adapté pour transmettre au terminal des messages protocolaires émis par un gestionnaire de service lors de l'exécution du service associé,
le procédé comprenant les étapes suivantes :
• lors d'une connexion du terminal au réseau, la mise à jour d'un indicateur des services auxquels le terminal a accès,
• la sélection, en fonction de l'indicateur, d'un paquet de règles de tri de messages protocolaires émis par des gestionnaires de services,
• en fonction du paquet sélectionné, le tri de messages protocolaires envoyés par plusieurs gestionnaires de service et la transmission au terminal des messages protocolaires triés,
**caractérisé en ce que** ledit réseau comprend en outre :
• un gestionnaire de profils, comprenant une liste des terminaux connectés au réseau et une liste de profils abonnés associée, chaque profil abonné comprenant notamment un indicateur des services auxquels le terminal a accès, et **en ce que** ledit procédé comprend en outre les étapes suivantes :
• identification d'un terminal, connexion dudit terminal au réseau et mise à jour de l'indicateur en fonction des services auxquels le terminal a accès.

6. Procédé d'ajout d'un service additionnel de rang n+1 dans un réseau de communication selon l'une des revendications 1 à 4 comprenant initialement n gestionnaires de services, le procédé d'ajout comprenant les étapes suivantes :
• l'ajout d'un gestionnaire de service de rang n+1,
• l'ajout, dans le gestionnaire de conflits, de paquets de règles appropriés pour résoudre des conflits d'interaction entre le service de rang n+1 et au moins un service de rang i compris entre 1 et n,
• la mise à jour, dans le gestionnaire de profils et • pour chaque terminal connecté au réseau, de l'indicateur des services auxquels le terminal a accès.

## Claims

1. Communication network comprising:
• n service managers (AS1, AS2, ..., ASn), n being a whole number greater than or equal to 2, each service manager being capable of executing an associated service,
• a routing means (MR) capable of transmitting to a terminal protocol messages sent by a service manager during the execution of the associated service,
• a conflict manager comprising:
• a set of packets of rules, each packet comprising rules for sorting protocol messages capable of being sent by at least two service managers,
• a selection means for selecting a packet of rules depending on an indicator of the services to which the terminal has access,
• a sorting means in order, depending on a content of a selected packet of rules, to sort protocol messages sent by at least two service managers during the execution of the associated services and to transmit the sorted protocol messages to the routing means (MR),
**characterized in that** said network also comprises:
• a profile manager, comprising a list of the terminals connected to the network and an associated list of subscriber profiles, each subscriber profile notably comprising an indicator of services to which the terminal has access,
• a connection manager suitable for identifying a terminal, connecting said terminal to the network and updating the indicator according to the services to which the terminal has access.

2. Network according to Claim 1, in which the indicator is a multiplet of n bits, each bit of rank i included between 1 and n being capable of taking two values:
• a first value (one) if the terminal has access to a service of rank i,
• a second value (zero) otherwise.

3. Network according to one of Claims 1 and 2, in which each packet is indexed by an index of n bits, each bit of rank i included between 1 and n being capable of taking two values:
• a first value (one), if the packet comprises rules for sorting protocol messages sent by the service manager of rank i and by other service managers of ranks different from i, or
• a second value (zero) otherwise.

4. Network according to Claim 3 taken in combination with Claims 1 and 2, in which the selection of a packet consists in selecting a packet, the index of which is identical to the indicator.

5. Method for managing conflicts during the execution of services sent to a terminal in a communication network comprising:
• n service managers (AS1, AS2, ..., ASn), n being a whole number greater than or equal to 2, each service manager being capable of executing an associated service,
• a routing means (MR) capable of transmitting to a terminal protocol messages sent by a service manager during the execution of the associated service,
the method comprising the following steps:
• during a connection of the terminal to the network, the updating of an indicator of the services to which the terminal has access,
• the selection, according to the indicator, of a packet of rules for sorting protocol messages sent by service managers,
• according to the selected packet, the sorting of protocol messages sent by several service managers and the transmission to the terminal of the sorted protocol messages,
**characterized in that** said network also comprises:
• a profile manager, comprising a list of the terminals connected to the network and an associated list of subscriber profiles, each subscriber profile notably comprising an indicator of the services to which the terminal has access, and **in that** said method also comprises the following steps:
• identification of a terminal, connection of said terminal to the network and updating of the indicator according to the services to which the terminal has access.

6. Method for adding an additional service of rank n+1 in a communication network according to one of Claims 1 to 4, initially comprising n service managers, the addition method comprising the following steps:
• the addition of a service manager of rank n+1,
• the addition, in the conflict manager, of packets of appropriate rules for resolving conflicts of interaction between the service of rank n+1 and at least one service of rank i comprised between 1 and n,
• the updating, in the profile manager and for each terminal connected to the network, of the indicator of the services to which the terminal has access.

## Patentansprüche

1. Kommunikationsnetzwerk, das enthält:
• n Diensteverwaltungen (AS1, AS2, ..., ASn), wobei n eine ganze Zahl größer als oder gleich 2 ist, wobei jede Diensteverwaltung einen zugeordneten Dienst ausführen kann,
• eine Routingeinrichtung (MR), die geeignet ist, um an ein Endgerät Protokollmitteilungen zu übertragen, die von einer Diensteverwaltung bei der Ausführung des zugeordneten Diensts gesendet werden,
• eine Konfliktverwaltung, die enthält:
• eine Gruppe von Regelpaketen, wobei jedes Paket Regeln zum Sortieren von Protokollmitteilungen enthält, die von mindestens zwei Diensteverwaltungen gesendet werden können,
• eine Auswahleinrichtung, um ein Regelpaket in Abhängigkeit von einem Indikator der Dienste auszuwählen, auf die das Endgerät Zugriff hat,
• eine Sortiereinrichtung, um in Abhängigkeit von einem Inhalt eines ausgewählten Regelpakets Protokollmitteilungen zu sortieren, die von mindestens zwei Diensteverwaltungen bei der Ausführung der zugeordneten Dienste ausgesendet werden, und um die sortierten Protokollmitteilungen an die Routingeinrichtung (MR) zu übertragen,
**dadurch gekennzeichnet, dass** das Netzwerk außerdem enthält:
• eine Profilverwaltung, die eine Liste der mit dem Netzwerk verbundenen Endgeräte und eine zugeordnete Liste von Teilnehmerprofilen enthält, wobei jedes Teilnehmerprofil insbesondere einen Indikator der Dienste enthält, auf die das Endgerät Zugriff hat,
• eine Verbindungsverwaltung, die geeignet ist, um ein Endgerät zu identifizieren, das Endgerät mit dem Netzwerk zu verbinden und den Indikator in Abhängigkeit von den Diensten, auf die das Endgerät Zugriff hat, zu aktualisieren.

2. Netzwerk nach Anspruch 1, bei dem der Indikator ein Multiplett von n Bits ist, wobei jedes Bit des Rangs i zwischen 1 und n zwei Werte annehmen kann:
• einen ersten Wert (eins), wenn das Endgerät auf einen Dienst des Rangs i Zugriff hat,
• sonst einen zweiten Wert (null).

3. Netzwerk nach einem der Ansprüche 1 bis 2, bei dem jedes Paket durch einen Index von n Bits indexiert ist, wobei jedes Bit des Rangs i zwischen 1 und n zwei Werte annehmen kann:
• einen ersten Wert (eins), wenn das Paket Regeln zum Sortieren von Protokollmitteilungen enthält, die von der Diensteverwaltung des Rangs i und von anderen Diensteverwaltungen anderer Ränge als i gesendet werden, oder
• sonst einen zweiten Wert (null).

4. Netzwerk nach Anspruch 3 in Kombination mit den Ansprüchen 1 und 2, bei dem die Auswahl eines Pakets darin besteht, ein Paket auszuwählen, dessen Index gleich dem Indikator ist.

5. Verfahren zur Konfliktverwaltung bei der Ausführung von für ein Endgerät in einem Kommunikationsnetzwerk bestimmten Diensten, das enthält:
• n Diensteverwaltungen (AS1, AS2, ..., ASn), wobei n eine ganze Zahl größer als oder gleich 2 ist, wobei jede Diensteverwaltung einen zugeordneten Dienst ausführen kann,
• eine Routingeinrichtung (MR), die geeignet ist, um an das Endgerät Protokollmitteilungen zu übertragen, die von einer Diensteverwaltung bei der Ausführung des zugeordneten Diensts gesendet werden,
wobei das Verfahren die folgenden Schritte enthält:
• bei einer Verbindung des Endgeräts mit dem Netzwerk, die Aktualisierung eines Indikators der Dienste, auf die das Endgerät Zugriff hat,
• die Auswahl, in Abhängigkeit vom Indikator, eines Pakets von Regeln zum Sortieren von Protokollmitteilungen, die von Diensteverwaltungen gesendet werden,
• in Abhängigkeit vom ausgewählten Paket, das Sortieren von von mehreren Diensteverwaltungen gesendeten Protokollmitteilungen und die Übertragung der sortierten Protokollmitteilungen an das Endgerät, **dadurch gekennzeichnet, dass** das Netzwerk außerdem enthält:
• eine Profilverwaltung, die eine Liste der mit dem Netzwerk verbundenen Endgeräte und eine zugeordnete Liste von Teilnehmerprofilen enthält, wobei jedes Teilnehmerprofil insbesondere einen Indikator der Dienste enthält, auf die das Endgerät Zugriff hat,
und dass das Verfahren außerdem die folgenden Schritte enthält:
• Identifikation eines Endgeräts, Verbindung des Endgeräts mit dem Netzwerk und Aktualisierung des Indikators in Abhängigkeit von den Diensten, auf die das Endgerät Zugriff hat.

6. Verfahren zum Hinzufügen eines zusätzlichen Diensts des Rangs n+1 in einem Kommunikationsnetzwerk nach einem der Ansprüche 1 bis 4, das ursprünglich n Diensteverwaltungen enthält, wobei das Hinzufügungsverfahren die folgenden Schritte enthält:
• das Hinzufügen einer Diensteverwaltung des Rangs n+1,
• das Hinzufügen, in die Konfliktverwaltung, von Paketen von geeigneten Regeln zur Lösung der Konflikte der Interaktion zwischen dem Dienst des Rangs n+1 und mindestens einem Dienst des Rangs i zwischen 1 und n,
• die Aktualisierung, in der Profilverwaltung und für jedes mit dem Netzwerk verbundene Endgerät, des Indikators der Dienste, auf die das Endgerät Zugriff hat.
